# EUROPEAN PATENT APPLICATION

(11) **EP 4 749 554 A1**
(43) Date of publication of application: **27.05.2026**
(21) Application number: 25215447.1
(22) Date of filing: 13.11.2025
(51) Int. Cl.: G06Q 20/18, G07F 19/00

(54) **USER-SELECTED CONFIGURATION**

(30) Priority: 22.11.2024 US 202418956673
(71) Applicant: NCR Atleos Corporation, Atlanta Georgia 30308-1007 (US)
(72) Inventor: DONALDSON, Casey Victor, Dundee DD4 6PW (GB); URI, Dominic, Peterhead AB42 5BE (GB); KURJANOVA, Alisa, Dundee DD4 6ER (GB); SUTCLIFFE, Cameron Bailey, Dundee DD2 2BG (GB); FERGUSON, Ross MacKinnon, Aberdeen AB15 8RB (GB)
(74) Representative: Secerna LLP

(57) **Abstract**

A method and a Self-Service Terminal is disclosed. The method comprises receiving, at a Self-Service Terminal, SST, user-selected setting data indicative of at least one user preferred setting for at least one respective operating parameter of the SST; responsive to receiving the user-selected setting data, modifying, by the SST, at least one initial setting for the at least one respective operating parameter of the SST into the at least one user preferred setting; and responsive to said modifying, updating the at least one respective operating parameter of the SST based on the at least one user preferred setting.

## Description

### Field of the Invention

The present invention relates to a method for configuring a Self-Service Terminal, SST, to operate with at least one user preferred setting and a Self-Service Terminal that can be configured to operate with at least one user preferred setting. In particular, but not exclusively, the present invention relates to a methodology by which a user can predetermine settings for operating parameters of an SST prior to initiating a transaction at the SST, send data indicative of user preferred settings to the SST, for example via a wireless communication link, and update the operating parameters of the SST based on the user preferred settings. This allows the user to customize or configure accessibility settings of the SST in advance of a transaction to suit their own requirements.

### Background

Self-Service Terminals (SSTs) are known. SSTs are used in a range of industries including retail and banking. For example, one type of SSTs are Point of Sale (POS) Terminals, such as check out terminals, which are often used in a retail environment where they may be operated by a sales clerk or a customer to facilitate transactions. Another type of SST is an Automated Teller Machine (ATM). An ATM is an electronic banking outlet that provides a range of services to a customer and allows customers/users to complete basic transactions without the aid of a bank representative or teller. Anyone with a credit card or debit card can access transaction services at most ATMs. ATMs provide both basic cash-dispensing services as well as advanced functions, including, for example: check depositing, account information access, fund transfers, marketing of relevant products and the like. Historically, ATMs have not included any functionality to enable a user to communicate with a remote bank teller. However, newer types of ATM do have additional functionality that enables a user to communicate with a bank teller. These new types of ATMs are sometimes referred to as Interactive Teller Machines (ITMs). ITMs offer the basic components of an ATM, such as the receipt printer and card reader; however, ITMs usually include additional features such as: a video camera and handset for conducting conversations with a teller, a coin dispenser for distributing different denominations of coins, an ID scanner for authenticating the customer, a signature pad and the like.

Whilst SSTs and ATMs are now widespread, a personalized interaction with customer service representatives within a bank branch is important for many customers such as those with disabilities. An increase in bank closures globally thus may create a significant problem for people with disabilities. As bank branches close, customers increasingly must use ATMs, or other SSTs, to access bank facilities instead. Currently, however, accessibility settings of an SST are not easily customisable by a user at the SST. Thus, the SSTs/ATMs may not be easy to use for certain users (e.g., those with neurodiverse conditions) meaning that some disabled users may be marginalised by the technology and/or may be unable to access certain transactions. Some other users may also avoid use of the SSTs/ATMs completely (e.g., due to language barriers).

### Summary

It is an aim of the present invention to at least partly mitigate one or more of the above-mentioned problems.

It is an aim of the present invention to allow an SST to be configured to operate with at least one user preferred setting.

It is an aim of the present invention to allow an SST to be configured to operate with at least one user preferred setting without selecting the user preferred settings at the SST itself.

It is an aim of the present invention to allow a user to predetermine settings prior to a transaction that may be used to update operating parameters of an SST for the user's transaction.

It is an aim of the present invention to improve the accessibility of SSTs and allow disabled users to more easily access SSTs.

It is an aim of the present invention to allow a user to use the same SST user preferred settings for each transaction they perform without manually selecting the settings each time.

It is an aim of the present invention to allow a user to update/configure their user preferred settings for an SST on their personal or mobile device or via a customer service representative within a bank branch or via a web app / web page.

It is an aim of the present invention to allow a user to use/obtain/order a physical or digital smart card holding their configured data (data that indicates a user's personal preferences for operating parameters of a SST).

According to a first aspect of the present invention there is provided a computer-implemented method for configuring a Self-Service Terminal, SST, to operate with at least one user preferred setting, comprising the steps of: receiving, at a Self-Service Terminal, SST, user-selected setting data indicative of at least one user preferred setting for at least one respective operating parameter of the SST; responsive to receiving the user-selected setting data, modifying, by the SST, at least one initial setting for the at least one respective operating parameter of the SST into the at least one user preferred setting; and responsive to said modifying, updating the at least one respective operating parameter of the SST based on the at least one user preferred setting.

Aptly, the method, further comprising receiving the user-selected setting data via a wireless communication link.

Aptly, the method, further comprising receiving the user-selected setting data via the wireless communication link from a token of the user.

Aptly, the method, wherein the token of the user comprises a physical card or a mobile device configured to transmit data via a radio frequency communication link, wherein receiving comprises receiving the user-selected setting data via the radio frequency communication link responsive to receiving a tap of the physical card or the mobile device at a Bluetooth or NFC or RFID reader of the SST.

Aptly, the method, further comprising via the Bluetooth or NFC or RFID reader, continuously monitoring for the presence of the physical card or mobile device.

Aptly, the method, further comprising when the user initiates a transaction on the SST, automatically displaying a prompt on a display of the SST for the user to tap their physical card or mobile device on the Bluetooth or NFC or RFID reader.

Aptly, the method, further comprising during a transaction on the SST, detecting, by the SST, an input event indicating the user wishes to modify the at least one initial setting of the SST; and displaying a prompt on a display of the SST for the user to tap their physical card or mobile device on the Bluetooth or NFC or RFID reader.

Aptly, the method, wherein the at least one respective operating parameter is at least one user interface operating parameter for a user interface on a display of the SST, wherein the method further comprises, responsive to modifying at least one initial user interface setting into at least one user preferred user interface setting, updating the user interface to provide a preferred user interface for the user.

Aptly, the method, further comprising updating the user interface by changing at least one of a font type, font size, font colour, or language for text presented on the user interface.

Aptly, the method, further comprising updating the user interface by changing at least one of a global background colour of the user interface or a local background colour behind text presented on the user interface.

Aptly, the method, further comprising the at least one respective operating parameter is at least one volume operating parameter for a speaker of the SST, wherein the method further comprises responsive to modifying at least one initial volume setting into at least one user preferred volume setting, updating the volume level output from the speaker to provide a preferred volume for the user.

Aptly, the method, further comprising receiving the user-selected setting data comprises receiving data indicative of the at least one user preferred setting that is predetermined by the user prior to initiation of a transaction at the SST.

Aptly, the method, wherein the user-selected setting data is predetermined by the user responsive to the user selecting the at least one user preferred setting via an app or web-based interface on a mobile device of the user which is then stored on the mobile device and/or transferred to a physical card of the user.

Aptly, the method, further comprising prior to the updating, determining that required setting data to apply the at least one user preferred setting is available on the SST.

Aptly, the method, further comprising when the required setting data is not available on the SST, transmitting, by the SST, a request to a server, that is remote from the SST, for the required setting data; and responsive to transmitting the request, receiving, at the SST, the required setting data from the server.

Aptly, the method, further comprising performing a transaction at the SST with said at least one respective operating parameter of the SST updated based on the at least one user preferred setting.

Aptly, the method, further comprising, subsequent to completing the transaction, resetting at least one setting of the SST to said at least one initial setting.

According to a second aspect of the present invention there is provided a Self-Service Terminal, SST, comprising at least one processor configured to receive user-selected setting data indicative of at least one user preferred setting for at least one respective operating parameter of the SST; modify at least one initial setting for the at least one respective operating parameter of the SST into the at least one user preferred setting; and update the at least one respective operating parameter of the SST based on the at least one user preferred setting.

Aptly, the SST, wherein the SST is an Automated Teller Machine, ATM.

According to a third aspect of the present invention there is provided a computer program comprising instructions which, when executed by a computing device, cause the computing device to carry out the steps of the method defined by the first aspect of the present invention.

Certain embodiments of the present invention provide a method allowing a user to configure an SST to operate with their user preferred settings.

Certain embodiments of the present invention provide a method allowing a user to predetermine settings for operation of an SST prior to a transaction.

Certain embodiments of the present invention allow a user to optimise the accessibility settings of an SST to suit their requirements and allow them to access the full functionality of the SST.

Certain embodiments of the present invention allow a user to personalise the settings of an SST.

Certain embodiments of the present invention provide a method allowing a user to use the same settings for each SST transaction without manually selecting the settings each time.

Certain embodiments of the present invention allow an SST to receive user-selected setting data indicative of user preferred settings to automatically update operating parameters of the SST.

Certain embodiments of the present invention allow user-selected setting data to be stored on a user token, such as a physical card or mobile device, and transmitted via a wireless communication link to an SST.

Certain embodiments of the present invention allow user-selected setting data to be transmitted via a radio frequency communication link, such as NFC, Bluetooth, or RFID.

Certain embodiments of the present invention allow user-selected settings to be transmitted to an SST via a one-tap process upon initiating an SST transaction, where multiple SST settings can be updated using a single tap of a user token without requiring manual configuration of settings directly on the SST itself.

Certain embodiments of the present invention allow a user to update their desired accessibility settings on a mobile device or through an on-site branch with the help of customer services or via a web app / web page on any compatible device.

Certain embodiments of the present invention allow an SST to retrieve setting data from a server to update the SST operating parameters based on user preferred settings and/or allow an SST to retrieve setting data from local storage to allow updating of operating parameters without requirement for backend implementation.

Certain embodiments of the present invention help provide one-touch configuration of personalized accessibility settings for Self-Service Terminals.

### Brief Description of the Drawings

Embodiments of the present invention will now be described hereinafter, by way of example only, with reference to the accompanying drawings in which:
Figure 1 illustrates a computing system;
Figure 2 illustrates a further computing system;
Figure 3 illustrates a flowchart describing the steps taken for a user to select their user preferred settings and store user-selected setting data on a physical card or mobile device; and
Figure 4 illustrates a flowchart describing the steps taken for a user to configure a SST to operate with user preferred settings via predetermined user-selected setting data.

In the drawings like reference numerals refer to like parts.

### Detailed Description

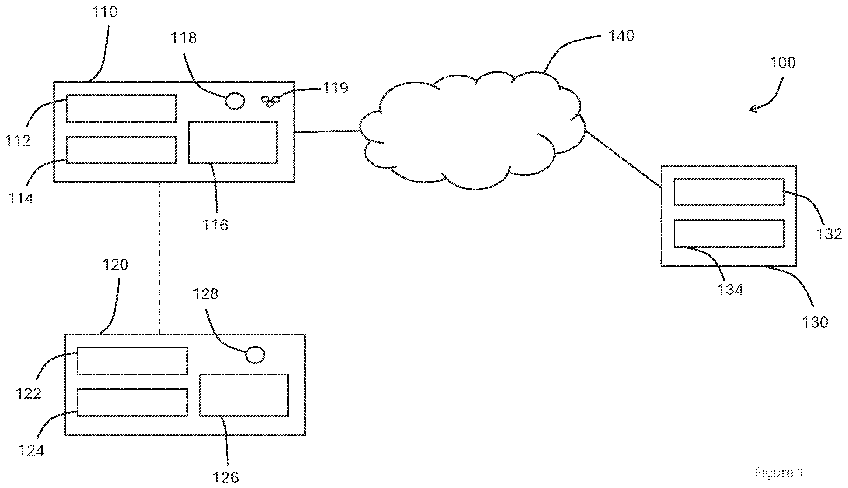

Figure 1 illustrates a computing system 100. In the computing system 100 there is an Automated Teller Machine (ATM) 110, a mobile device 120 of a user of the ATM, and a server 130 of a bank. The ATM is an example of a Self-Service Terminal (SST) and the ATM may or may not be an Interactive Teller Machine (ITM). The ATM includes one or more processors 112, at least one memory 114 and a display 116. The memory is a non-transitory computer-readable storage medium. The memory 114 stores executable software that is executable by the processors 112 of the ATM. The display 116 displays a graphical user interface for enabling the user to enter details and select options during transactions at the ATM. The ATM also includes a contactless reader 118, and a speaker 119. It will be appreciated that the contactless reader 118 may be a near-field communication (NFC) reader, radio-frequency identification (RFID) reader, Bluetooth reader (for example a Bluetooth Low Energy beacon/proximity sensor) or the like. The contactless reader 118 may be the contactless card reader (CCR) that is already present on the ATM. Alternatively, a separate contactless reader 118 may be provided. It will be appreciated that NFC, RFID, Bluetooth or the like are sets of protocols that allow communication between two devices over short distances, as known to the person skilled in the art. For example, NFC allows communication over very small distances (e.g., less than around 10cm). The ATM may also include a communication interface (not shown) for communicating with the server 130. The ATM may also include an encrypted PIN pad (not shown), a note dispenser, a receipt printer, a card slot for insertion of a user's bank card (not shown), a camera (not shown), a microphone (not shown), a barcode reader (not shown) or the like as will be appreciated by a person of skill in the art. The executable software of the ATM, when executed by the processor(s), causes the ATM to carry out the methodology described herein. For example, operating parameters of the ATM (or other SST) may be updated based on user preferred settings. Operating parameters may include, for example, user interface operating parameters for a user interface on the display 116 (including background colour, font type, font size, font colour, language or the like) or a volume operating parameter for the speaker 119 or a screen reader/narrator setting operating parameter (which determines if text on the ATM screen are read aloud). Adjusting these parameters may allow some individuals, such as those with certain neurodiverse disabilities, to more easily read text displayed on a screen. The accessibility settings preferred for a given individual vary between individuals and therefore may be set on an individual basis. When the ATM is an ITM, the ATM may further include additional functionality. For example, the ITM may include a signature pad, an ID scanner, a telephonic handset, a wired headset, a tactile keyboard, a beamforming microphone or the like as will be appreciated by a person of skill in the art. This hardware may not be present on a conventional non-ITM ATM. The ITM may also have functionality to enable an audio and video communication link to be established with a remote teller device. This functionality may not be present on a conventional non-ITM ATM.

The mobile device 120 of the user is for example a smartphone or tablet or the like. The mobile device 120 is an example of a token of the user. The mobile device 120 also includes one or more processors 122, at least one memory 124 and a display 126. The memory 124 is also a non-transitory computer readable storage medium. The memory 122 stores executable software that is executable by the processors of the mobile device. The display 126 also displays a graphical user interface. As described herein, software of the mobile device 120 allows for a user to select user preferred settings (via an app or web-based interface) in advance of a transaction at the ATM, which are stored as a digital card in the memory 124 as user-selected setting data corresponding to the selected user preferred settings. The mobile device also includes a communication interface 128 for communicating with the ATM 110 via a wireless communication link. For example, the wireless communication link may be a radio frequency communication link, using a communication protocol such as near field communication (NFC), Bluetooth, Bluetooth Low Energy (BLE), radio-frequency identification (RFID) or the like, as known to the person known in the art. Aptly, the communication interface 128 is an NFC chip, Bluetooth chip, RFID chip or the like. It will be appreciated that a radio frequency communication link uses radio frequency electromagnetic waves to transmit data, such as user-selected setting data, with a frequency of around 20 kHz to around 300 GHz.

The server 130 of the bank is a remote server (i.e. remote from the ATM 110) that may store bank details associated with the bank account of the user. The server 130 also includes one or more processors 132 and at least one memory 134. The memory 134 is also a non-transitory computer readable storage medium. The memory 134 stores executable software that is executable by the processors of the server 130. According to the methodology described herein, the memory 134 of the server 130 may store setting data corresponding to the user preferred settings for operating parameters of an ATM.

The ATM 110 and server 130 communicate via a network 140. The network 140 may be wired, wireless or a combination of wired and wireless. For example, the network is the internet. In some instances, the ATM 110 and mobile device 120 communicate via a short-range wireless communication link (indicated by the dashed line), for example NFC, RFID, Bluetooth or the like, when the ATM 110 and mobile device 120 are in sufficiently close contact, such as when the mobile device 120 is tapped on the contactless reader 118 of the ATM 110. The contactless reader 118 may continuously monitor for the presence of the mobile device 120 (or any other equivalent token - such as a physical smart card) during a transaction at the ATM 110. For example, a recognisable symbol may be present on the device/ATM/ATM screen (e.g., similar to the contactless logo) allowing the user to seamlessly use their token at any point during a transaction. Alternatively, the contactless reader 118 may only monitor for the presence of the mobile device 120 when a prompt is displayed on display 116 of the ATM 110 for the user to tap their mobile device 120 on the contactless reader 118.

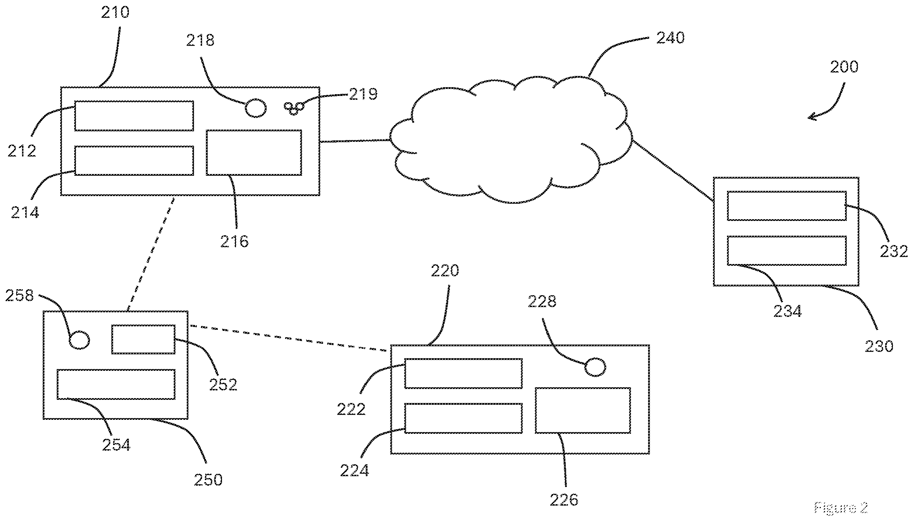

Figure 2 illustrates a computing system 200. As for the computing system 100 of Figure 1, there is an Automated Teller Machine (ATM) 210, a mobile device 220 of a user of the ATM, and a server 230 of a bank. In addition, there is a physical card 250 of a user. As in Figure 1, the ATM 210 and server 230 communicate via a network 240. The ATM 210, mobile device 220, server 230 and network 240 operate in the same way and have the same features as the corresponding ATM 110, mobile device 120, server 130 and network 140 of Figure 1.

The physical card 250 is an example of a token of the user. The physical card 250 may be a card specialised and/or solely for use with the methodology described herein or may be a bank card as used for transactions at the ATM 210. The physical card 250 shown in Figure 2 is a contactless card, but alternatively the physical card 250 may be a magstripe card or the like. The physical card 250 includes one or more processors 252 and at least one memory 254. The memory 254 is also a non-transitory computer readable storage medium. As described herein, user-selected setting data indicative of user preferred settings may be stored in the memory 254 of the physical card. The physical card 250 also includes a communication interface 258 for communicating with the ATM 210 via a wireless communication link. For example, the wireless communication link may be a radio frequency communication link, using a communication protocol such as near field communication (NFC), radio-frequency identification (RFID) or the like, as known to the person known in the art. It will be appreciated that the communication interface 258 may include an antenna and be a passive communication interface 258, where power transmitted by a contactless reader (such as the contactless reader 218 of the ATM 210) is received by the communication interface 258 to activate and/or power the processor 252 and allow for user-selected setting data to be transmitted from the physical card 250 via the communication interface 258.

In some instances, the ATM 210 and physical card 250 communicate via a short-range wireless communication link (indicated by the dashed line), for example NFC, RFID, or the like, when the ATM 210 and physical card 250 are in sufficiently close contact, such as when the physical card 250 is tapped on the contactless reader 218 of the ATM 210. The contactless reader 218 may continuously monitor for the presence of the physical card 250 during a transaction at the ATM 210. Alternatively, the contactless reader 218 may only monitor for the presence of the physical card 250 when a prompt is displayed on display 216 of the ATM 210 for the user to tap their physical card 250 on the contactless reader 218. It will be appreciated that when the physical card 250 is a magstripe card, with user-selected setting data stored on a strip of magnetic material attached to the card, then the ATM 210 and physical card 250 communicate via swiping the physical card 250 at a magnetic card reader of the ATM 210 and the user-selected setting data is transmitted to the ATM 210 by a magnetic reading head of the magnetic card reader reading the data.

According to the methodology described herein, the user-selected setting data stored on the physical card 250 may be predetermined by the user prior to initiating a transaction at the ATM 210 and from time to time the user-selected setting data stored on the physical card 250 may be updated/altered. For example, the user-selected setting data stored on the physical card 250 may be updated via the mobile device 220. Software of the mobile device 220 allows for a user to select user preferred settings (via an app or web-based interface) in advance of a transaction at the ATM, which are stored in the memory 224 of the mobile device 220 as user-selected setting data corresponding to the selected user preferred settings. The user-selected setting data is then transferred to the physical card 250 to be stored in the memory 254 of the physical card 250 via a wireless communication link (indicated by the dashed line) between the communication interface 228 of the mobile device 220 and the communication interface 258 of the physical card 250. For example, the wireless communication link may be NFC, RFID, or the like, and may operate when the physical card 250 and mobile device 220 are in sufficiently close contact, such as when the physical card 250 is tapped on the mobile device 220. The communication interface 228 of the mobile device 220 may be an active interface, such that it can transmit power to the physical card 250 to thereby activate/power the processor 252 of the physical card 250. Aptly, the physical card 250 may be tapped on a specified part of the mobile device 220, such as at or near a top-most part of the rear side of the mobile device 220. It will be appreciated that the new user-selected setting data transferred to the physical card 250 may replace old user-selected setting data stored in the memory 254 or may add to old user-selected setting data stored in the memory 254. It will be appreciated that by predetermining any accessibility settings that are user customisable (such as font size or language), the need for a user to set their desired accessibility settings directly on the SST itself (for example by choosing or selecting options one-by-one on a touchscreen of a display of the SST) prior to each transaction is avoided. This may help some individuals who may struggle when attempting to configure the accessibility settings on the display of the SST or may find it difficult and/or time consuming to re-configure the accessibility settings directly on the SST itself for every transaction they perform.

According to other embodiments as described herein, the physical card 250 may be a magstripe card, and the user-selected setting data may then be updated by swiping the magnetic strip of the card at an appropriate magnetic card reader, for example at a terminal or ATM that allows for selecting and updating user preferred settings. Alternatively, for a physical card 250 that is any of a contactless card or magstripe card or the like, the user-selected setting data stored on the physical card 250 may be altered/updated via selecting new user preferred settings on a web application of a computing device without a communication interface (such as certain mobile devices or a laptop or the like). In this case, as the user-selected setting data stored on the physical card 250 cannot be updated via a wireless communication link, a new physical card 250 may be ordered, created and sent to the user with their new user-selected setting data stored on it. Alternatively, the user-selected setting data stored on the physical card 250 may be altered/updated via customer service representatives within a bank branch (such as bank tellers or the like), where the customer service representative may either update the existing physical card 250 (via a wireless communication link) or may order and create a new physical card.

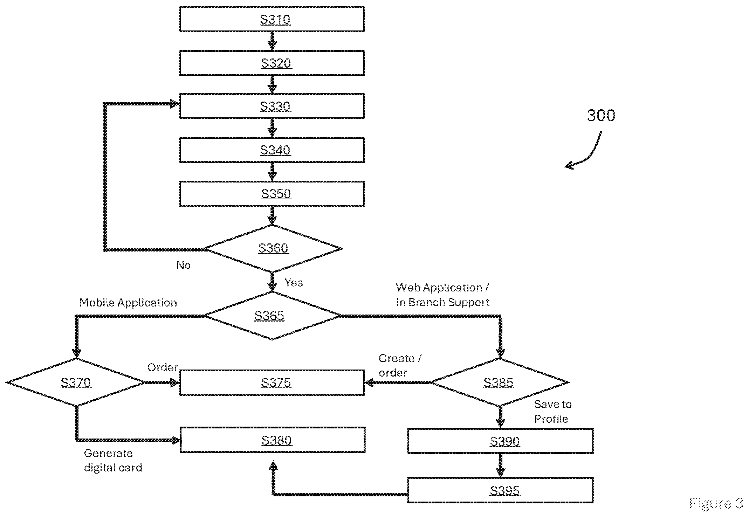

Figure 3 illustrates a method 300 whereby a user can select user preferred settings for operating parameters of a SST and can store user-selected setting data indicative of the user preferred settings to a token, such as a physical card or mobile device. It will be appreciated that the method 300 can be performed with the computing systems described herein, for example the computing system 100 of Figure 1 or the computing system 200 of Figure 2.

First, in an initial step S310, a user chooses to update user-selected setting data stored on a token (such as a physical card or mobile device). It will be appreciated that choosing to update user-selected setting data may include when the user has not previously predetermined any user preferred settings and does not have an existing token with stored user-selected setting data, or may include when the user has previously predetermined user preferred settings and has an existing token with stored user-selected setting data. In the case when the user has an existing token with stored user-selected setting data, the user may choose to update their previously predetermined user-selected setting data or may add user-selected setting data corresponding to new user preferred settings.

Next, in an interface step S320, the user chooses which creation interface to use to update their user-selected setting data stored on a token. For example, the creation interface may include a mobile application (otherwise known as an app) on a mobile device of the user (i.e. an app-based interface), or a web application on either a mobile device or other computing device (i.e. a web-based interface), or via customer service representatives within a bank branch (such as bank tellers or the like). Then, in an option list step S330, the chosen creation interface lists the available operating parameters of an SST (e.g., the physical way the SST works - volume, screen colour or the like) that are able to be configured/updated by the user selecting user preferred settings for those operating parameters. It will be appreciated that, depending on the creation interface chosen in the interface step S320, the available operating parameters may be displayed on a display of a mobile device (by an app-based or web-based interface), displayed on a display of another computing device or may be listed via a customer service representative (for example, via a display of a computing device operated by the customer service representative, or via a printed list, or via the list being read out by the customer service representative). For example, the available operating parameters may include user interface operating parameters for a user interface on a display of a SST (such as font type, font size, font colour or language for text presented on the user interface, or global background colour of the user interface, or local background colour behind text presented on the user interface, or the like) and/or volume operating parameters for a speaker of a SST (such as volume level output from the speaker) and/or a reader/narrator operating parameter (such as an on/off selection for a functionality where displayed text can be read out loud). For example, the reader/narrator function may be toggled on or off. It will be appreciated that the available operating parameters able to be user configured may vary from SST to SST and/or may vary from SST operator to operator. That is to say, different SSTs and operators of SSTs may have different operating parameters that are able to be configured/altered by a user.

Then, in a selection step S340, the user selects their user preferred setting for each available operating parameter in the list provided in the option list step S330. That is to say, the user predetermines at least one user preferred setting via an app-based or web-based interface, or via a customer service representative, prior to initiation of a transaction at an SST. For each available user-configurable operating parameter from the list, the user selects a user preferred setting suitable for their accessibility requirements (i.e., a stored setting value which indicates their preference for a particular operating parameter) . By way of example only, a user may select a user preferred setting of 'blue' for a font colour operating parameter, '12' for a font size operating parameter, 'Spanish' for a language operating parameter, 'black' for a local background colour operating parameter, and '15' for a volume operating parameter. It will be appreciated that a user may not select a user preferred setting for a given operating parameter, in which case a default or initial setting for that operating parameter may be used during operation of the SST. That is to say, the user may select user preferred settings for a subset of the available operating parameter in the list provided. Selection of the user preferred settings may be via a touchscreen of a mobile device, via keyboard or mouse entry on a computing device, via indicating user preferred settings to a customer service representative (e.g. by speaking, pointing, signing, typing), or the like. It will be appreciated that selection of the user preferred settings by the user causes user-selected setting data indicative of the user preferred settings to be predetermined by the user and stored in a memory, for example a memory of a mobile device or computing device. The memory may be a temporary memory. User-selected setting data is data that represents the user preferred settings in a format suitable for storage in the respective memory, for example a binary representation of the user preferred settings. By way of example only, the user-selected setting data may encode the following representation of the user preferred settings:

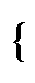

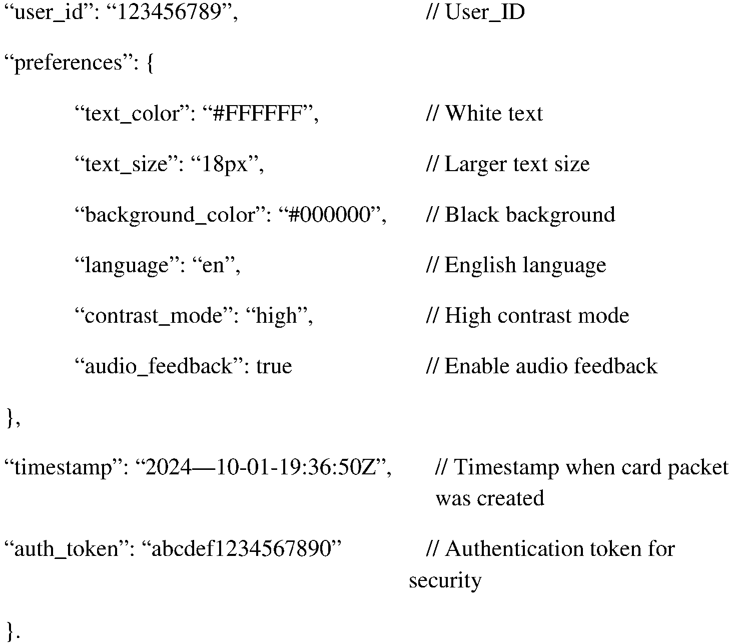

In the above example, user preferred settings for the text colour, text size, background colour, language, contrast mode and audio feedback operating parameters are represented, along with a user identification number, timestamp and authentication token. It will be appreciated that the above representation of the user-selected setting data may be encoded into an appropriate format for storing in the respective memory.

Next, in an optional display setting S350, a visual representation of an SST display operating with the user preferred settings for the respective operating parameters may be shown to the user. For example, a display of a mobile device or computing device may show the visual representation of an SST display. It will be appreciated that user preferred settings for certain operating parameters, such as volume operating parameters, are not represented to a user via a visual display. Then, in an accept decision step S360, the user is prompted to, optionally review, and accept their selected user preferred settings. This may be a prompt on the display of the mobile device or computing device or may be a prompt (for example a verbal question) from the customer service representative. If the user answers 'no' to the prompt and does not accept their selected user preferred settings, then the method 300 returns to the option list step S330 for the user to select their user preferred settings again. If the user answers 'yes' to the prompt and accepts their selected user preferred settings, then the method 300 proceeds with an interface decision step S365.

In the interface decision step S365, the method 300 proceeds according to which creation interface was chosen in the interface step S320. If a mobile application interface is used, then the method 300 proceeds to a first token-type decision step S370. In the first token-type decision step S370, the user is prompted to select whether to order a physical card or generate a digital card. If the user selects to order a physical card, then the method 300 proceeds to a physical-card step S375 where the user-selected setting data is transferred to a physical card to allow the user to use the physical card as their token (the setting data being the actual data behind the indication of the user preferred settings). If the user already has a suitable physical card and their mobile device has a communication interface suitable to transfer user-selected setting data to the physical card, then the physical-card step S375 may include transferring user-selected setting data to the physical card to update or change user-selected setting data stored within a memory of the physical card. This may include tapping the physical card on a suitable part of the mobile device to bring the physical card within range of a short-range wireless communication link (for example NFC or RFID) and initiate data transfer. Alternatively, the user may wish to order a new physical card with their user-selected setting data already stored on the physical card. In this case, the physical card will be created in a suitable location (for example at a bank branch) with the user-selected setting data indicative of the user preferred settings already transferred to the physical card and stored in the memory of the physical card. The physical card may then be posted to the user or collected by the user at a specified location (for example a bank branch).

If the user selects to generate a digital card in the first token-type decision step S370, then the method 300 proceeds to a digital-card step S380 to allow the user to use their mobile device as their token. In the digital-card step S380, the user-selected setting data indicative of the user preferred settings is stored on the mobile device in the form of a digital card in the mobile or virtual wallet of the mobile device. This may entail transferring the user-selected setting data to a different part of the memory, or a different memory, of the mobile device, and storing the user-selected setting data accordingly in the different part of the memory, or different memory, so that the user-selected setting data is suitable to use with the mobile wallet.

Alternatively, in the interface decision step S365, if a web application or in-branch support interface is used, then the method 300 proceeds to a second token-type decision step S385. In the second token-type decision step S385, the user is prompted to select whether to order a physical card or save the user-selected setting data to a profile to allow for generation of a digital card. If the user selects to order a physical card, then the method 300 proceeds to the physical-card step S375 where the user-selected setting data is transferred to a physical card to allow the user to use the physical card as their token. The physical-card step S375 proceeds as described above to provide a new or updated physical card with the new user-selected setting data transferred to.

If the user selects to save the user-selected setting data to a profile in the second token-type decision step S385, then the method 300 proceeds to a save step S390 where the user-selected setting data is saved to a user profile on a server. For example, the server may be a server of a bank or a server of an operator of SSTs. It will be appreciated that the user-selected setting data is transferred to and stored in a memory of the server, and linked to an account or profile of the user. Then, in a generation step S395, a digital card containing the user-selected setting data is generated. For example, a link to download a digital card to the user's mobile device may be provided to the user (for example by email) or the user may open a mobile application on their mobile device that enables generation of the digital card. Finally, the digital-card step S380 proceeds as described above to allow the user to use their mobile device as their token.

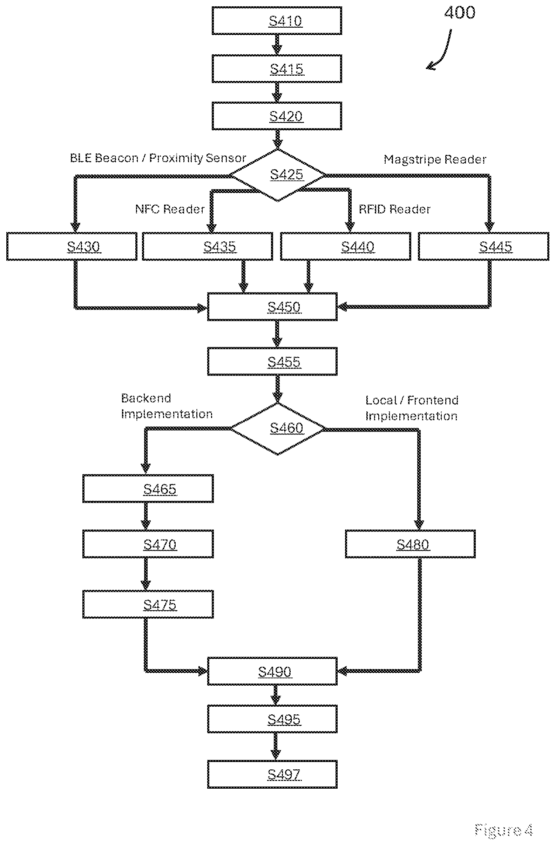

Figure 4 illustrate a method 400 whereby a user can configure a SST to operate with user preferred settings via predetermined user-selected setting data. It will be appreciated that the method 400 can be performed with the computing systems described herein, for example the computing system 100 of Figure 1 or the computing system 200 of Figure 2. The method 400 may be performed subsequently to the user performing the method 300 of Figure 3, prior to initiating a transaction at an SST, to predetermine user-selected setting data stored on a token based on selected user preferred settings.

First, in a predetermination step S410, a user generates or obtains a token containing user-selected setting data indicative of at least one user preferred setting. For example, the token may be a mobile device (or digital card on a mobile device) or physical card as described herein. It will be appreciated that the predetermination step S410 includes the user performing the method 300 of Figure 3 to select at least one user preferred setting (for example via an app or web-based interface on a mobile device, or web-based interface on a computing device, or via a customer service representative), which predetermines user-selected setting data indicative of the user preferred settings and transfers the user-selected setting data to the chosen token (mobile device or physical card) to store the user-selected setting data on the token. The user-selected setting data is therefore data indicative of at least one user preferred setting for at least one operating parameter of an SST that is predetermined by the user prior to initiation of a transaction at the SST.

The operating parameters that are configured through the method 400 may include, for example, one or more of user interface operating parameters for a user interface on a display of a SST (such as font type, font size, font colour or language for text presented on the user interface, or global background colour of the user interface, or local background colour behind text presented on the user interface, or the like) and/or volume operating parameters for a speaker of a SST (such as volume level output from the speaker). It will be appreciated that the available operating parameters able to be user configured may vary from SST to SST and/or may vary from SST operator to operator. That is to say, different SSTs and operators of SSTs may have different operating parameters that are able to be configured/altered by a user.

Then, in an initiation step S415, the user approaches a SST (for example an ATM or PoS terminal) and initiates a transaction, for example by tapping or selecting a prompt displayed on the screen or inserting, swiping or tapping their bank card. Next, in an optional accessibility-prompt step S420, the user indicates that they wish to configure the SST to operate with their at least one user preferred setting. For example, when the user initiates a transaction on the SST the SST may automatically display a prompt on a display of the SST for the user to tap (or swipe) their token (e.g. physical card or mobile device) on a reader of the SST if they wish to configure the operating parameters of the SST. Alternatively, during a transaction on the SST, the user may select an option indicating that they wish to configure operating parameters of the SST, with the SST detecting an input event indicating that the user wishes to modify at least one initial setting for at least one respective operating parameter of the SST. The SST may then display a prompt on a display of the SST for the user to tap (or swipe) their token (e.g. physical card or mobile device) on a reader of the SST.

Next, in an input decision step S425, the SST begins polling or monitoring the relevant reader(s) of the SST for presence of a user token (e.g. physical card or mobile device) containing user-selected setting data. It will be appreciated that monitoring the relevant reader(s) may occur after the display of a prompt in the accessibility-prompt step S420 or the relevant reader(s) may be continuously monitored by the SST (without display of a prompt). The method 400 proceeds depending on what type of reader(s) and/or communication protocols are installed and/or activated at a given SST. For example, the method proceeds to a BLE step S430 with a Bluetooth Low Energy (BLE) beacon (or proximity sensor), an NFC step S435 with an NFC reader, a RFID step S440 with an RFID reader, and/or a magstripe step S445 with a magnetic card reader. It will be appreciated that multiple of these readers may be installed in a single SST, in which case the method 400 proceeds to all the relevant steps simultaneously. Multiple types of reader (e.g. NFC, RFID, and/or BLE) may be installed within a single contactless reader. That is to say, the SST may be able to monitor multiple different types of reader at the same time. As is known to the person skilled in the art, monitoring a contactless reader (such as BLE, NFC, or RFID) may include periodically sending an appropriate wireless signal (optionally radio frequency signal) to activate/power a passive token and detecting if a response signal is received.

Then, in an interaction step S450, the user interacts with the SST via their token. For example, the user may tap their token (contactless physical card or mobile device) on a contactless reader of the SST, or the user may swipe or insert a token (magstripe physical card). It will be appreciated that the token of the user may instead be their conventional bank card, with the user-selected setting data stored on the bank card or stored on a server as described herein.

The SST then receives a data packet that includes the user-selected setting data. For example, the user-selected setting data may be received via a wireless communication link, optionally from the token of the user. The token may be configured to transmit data via a radio frequency communication link (e.g NFC, RFID, or BLE) as described herein, and the SST receives user-selected setting data via the radio frequency communication link upon the user tapping their token on the contactless reader. A tap of the token may enable this data to be transferred to the SST with one-touch. As described herein, the token may be a passive token, such as a contactless physical card, that is powered/activated via power transmitted from the contactless reader of the SST. It will be appreciated that wireless communication protocols (e.g NFC, RFID, or BLE) are well known in the art. Alternatively, the user-selected setting data may be read from magnetic data stored on a magnetic stripe, via a magnetic read head, as is known in the art. It will be appreciated that the user-selected setting data may be stored on a server of a bank or SST operator (remote from the SST) and if the user-selected setting data is not otherwise received by the SST, then the SST may transmit a request to the server for the user-selected setting data and the SST may then receive the user-selected setting data. In any of the above cases, the user-selected setting data is appropriately encoded data that represents a data packet indicative of the at least one user preferred setting for at least one respective operating parameter, such as that shown below and described above:

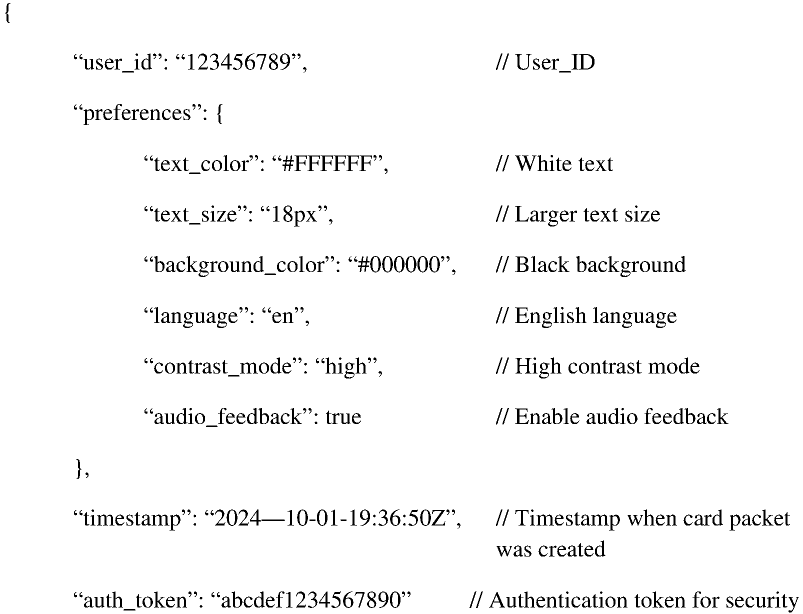

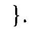

After receiving the user-selected setting data in the interaction step S450, in a modification step S455, the SST (or software executed on a processor of the SST) modifies at least one setting for each respective operating parameter of the SST from at least one initial setting into the at least one user preferred setting. That is to say, for each operating parameter that has a respective user preferred setting indicated in the user-selected setting data, the SST modifies a setting stored in a memory of the SST for that operating parameter from an initial setting into the user preferred setting. It will be appreciated that an initial setting may be a default setting or the like, such that the SST operates according to the initial settings in the absence of a user initiating the method 400. For example, the font size operating parameter may have an initial setting of 12px, and the user may have selected a user preferred setting of 18px so that 18px is therefore appropriately represented in the user-selected setting data. In this example, in the modification step S455, the setting for font size is modified from 12px to 18px after receiving the user-selected setting data. It will be appreciated that the modification step S455 includes, for user interface operating parameters, modifying initial user interface settings into user preferred user interface settings, and, for volume operating parameters, modifying initial volume settings into user preferred volume settings.

Next, in an implementation decision step S460, the method 400 proceeds depending on whether the method 400 is implemented using a backend implementation or a local/frontend implementation. That is to say, required setting data to apply each user preferred setting to update the respective operating parameter of the SST may be stored in a backend implementation (for example, a server that may be remote from the SST) or may be available in a local/frontend implementation (for example, locally on the SST). It will be appreciated that required setting data is the data required for the SST to update an operating parameter based on the respective user preferred setting. For example, the global background colour operating parameter may have a user preferred setting of blue, so data corresponding to a background colour of blue is therefore required for the SST to be able to implement the updating of the operating parameter based on the user preferred setting. It will be appreciated that different operating parameters may have respective required setting data stored using a different implementation, for example certain operating parameters may have their required setting data stored in a backend implementation whereas certain other operating parameters may have their required setting data stored in a frontend implementation. It will also be appreciated that for a given operating parameter, the required setting data to update the operating parameter to different settings may be stored using a different implementation. For example, the required setting data to update the global background colour operating parameter to blue may be stored in a backend implementation, whereas the required setting data to update the global background colour operating parameter to green may be stored in a frontend implementation. It will be appreciated that the implementation decision step S460 may therefore be carried out for each individual operating parameter that has a respective user preferred setting indicated in the user-selected setting data and also based on the respective user preferred setting for that respective operating parameter.

For a given operating parameter, if the required setting data to apply the user preferred setting is determined as not available on the SST in the implementation decision step S460, then the method proceeds to a first backend step S465. In the first backend step S465, a request is transmitted to the backend (for example, a server remote to the SST) for the required setting data. For example, the user-selected setting data itself (as received by the SST in the interaction step S450) may be sent from the SST to the backend software. Then, in a second backend step S470, the backend determines the required setting data to apply the user preferred settings indicated within the user-selected setting data. It will be appreciated that the second backend step S470 may include retrieving the required setting data from a memory of the backend (for example a memory of a server). For example, for a user preferred setting of blue for the global background colour operating parameter, the required setting data to apply the user preferred setting of blue is determined. Next, in a third backend step S475, the required setting data to apply the user preferred settings is transmitted back from the backend (for example, a server) to the SST, and the required setting data is therefore received at the SST.

For a given operating parameter, if the required setting data to apply the user preferred setting is instead determined as available on the SST in the implementation decision step S460, then the method proceeds to a frontend step S480. In the frontend step S480, required setting data to apply the user preferred setting to update each respective operating parameter is determined and obtained. It will be appreciated that this may include retrieving required setting data from a memory of the SST. For example, the required setting data to set the global background colour to green is retrieved from a memory of the SST.

Following either the third backend step S475 or the frontend step S480, the method 400 proceeds to an update step S490. In the update step S490, each operating parameter which had its setting modified in the modification step S455 is updated based on the respective user preferred setting. That is to say, required setting data, as obtained in the above-described steps in either the frontend or backend implementation, is used to apply each user preferred setting and thereby update each operating parameter based on the respective user preferred setting. For user interface operating parameters, the update step S490 involves updating the user interface operating parameters based on the user preferred user interface settings, which therefore updates the user interface to provide and display a preferred user interface for the user (as defined by the user in their user preferred user interface settings). For example, the user interface may be updated by changing at least one of a font type, font size, font colour, language for text, or the like presented on the user interface. Alternatively or additionally, the user interface may be updated by changing at least one of a global background colour of the user interface, local background colour behind text presented on the user interface, or the like. For volume operating parameters, the update step S390 involves updating the volume operating parameters based on the user preferred volume settings, which therefore updates the volume level output from a speaker to provide and output a preferred volume for the user (as defined by the user in their user preferred volume settings).

Next, in a transaction step S495, the user performs and/or completes a transaction at the SST. It will be appreciated that following the update step S490, the transaction is performed with at least one operating parameter of the SST updated based on the at least one user preferred setting. That is to say, the transaction is performed with the SST configured to operate with the user preferred settings, which may ensure the SST is accessible for the user's specific requirements. For example, the transaction may be performed with the font size set to a user preferred setting of 18px, rather than an initial/default setting of 12px.

Finally, in a reset step S497, the user finishes/completes their transaction and ends their session at the SST. After completing the transaction, the settings for operating parameters of the SST are reset to their initial settings, so that a subsequent user of the SST will start their transaction with the operating parameters set to the initial/default settings. It will be appreciated settings for each operating parameter that has been configured in the method 400 may be reset to the respective initial settings. The operating parameters of the SST are therefore updated based on the initial settings to a default configuration/mode. For example, the user interface on the display of the SST and volume level output from the speaker of the SST are reset to their default configuration.

Throughout the description and claims of this specification, the words "comprise" and "contain" and variations of them mean "including but not limited to" and they are not intended to (and do not) exclude other moieties, additives, components, integers or steps. Throughout the description and claims of this specification, the singular encompasses the plural unless the context otherwise requires. In particular, where the indefinite article is used, the specification is to be understood as contemplating plurality as well as singularity, unless the context requires otherwise.

Although the present disclosure has been particularly shown and described with reference to the preferred embodiments and various aspects thereof, it will be appreciated by those of ordinary skill in the art that various changes and modifications may be made without departing from the spirit and scope of the disclosure. It is intended that the appended claims be interpreted as including the embodiments described herein, the alternatives mentioned above, and all equivalents thereto.

Features, integers, characteristics or groups described in conjunction with a particular aspect, embodiment or example of the invention are to be understood to be applicable to any other aspect, embodiment or example described herein unless incompatible therewith. All of the features disclosed in this specification (including any accompanying claims, abstract and drawings), and/or all of the steps of any method or process so disclosed, may be combined in any combination, except combinations where at least some of the features and/or steps are mutually exclusive. The invention is not restricted to any details of any foregoing embodiments. The invention extends to any novel one, or novel combination, of the features disclosed in this specification (including any accompanying claims, abstract and drawings), or to any novel one, or any novel combination, of the steps of any method or process so disclosed.

The reader's attention is directed to all papers and documents which are filed concurrently with or previous to this specification in connection with this application and which are open to public inspection with this specification, and the contents of all such papers and documents are incorporated herein by reference.

## Claims

1. A computer-implemented method for configuring a Self-Service Terminal (SST) to operate with at least one user preferred setting, comprising:
receiving, at the SST, user-selected setting data indicative of at least one user preferred setting for at least one respective operating parameter of the SST;
responsive to receiving the user-selected setting data, modifying, by the SST, at least one initial setting for the at least one respective operating parameter of the SST into the at least one user preferred setting; and
responsive to said modifying, updating the at least one respective operating parameter of the SST based on the at least one user preferred setting.

2. The method as claimed in claim 1, further comprising receiving the user-selected setting data via a wireless communication link.

3. The method as claimed in claim 2, further comprising receiving the user-selected setting data via the wireless communication link from a token of the user.

4. The method as claimed in claim 3, wherein the token of the user comprises a physical card or a mobile device configured to transmit data via a radio frequency communication link, and wherein receiving comprises receiving the user-selected setting data via the radio frequency communication link responsive to receiving a tap of the physical card or the mobile device at a Bluetooth or (NFC) or RFID reader of the SST.

5. The method as claimed in claim 4, further comprising, via the Bluetooth or NFC or RFID reader, continuously monitoring for the presence of the physical card or mobile device; or
further comprising, when the user initiates a transaction on the SST, automatically displaying a prompt on a display of the SST for the user to tap their physical card or mobile device on the Bluetooth or near field communication (NFC) or radio frequency identification (RFID) reader.

6. The method as claimed in claim 4, further comprising, during a transaction on the SST, detecting, by the SST, an input event indicating the user wishes to modify the at least one initial setting of the SST; and displaying a prompt on a display of the SST for the user to tap their physical card or mobile device on the Bluetooth or NFC or RFID reader.

7. The method as claimed in any preceding claim, wherein the at least one respective operating parameter is at least one user interface operating parameter for a user interface on a display of the SST, and wherein the method further comprises, responsive to modifying at least one initial user interface setting into at least one user preferred user interface setting, updating the user interface to provide a preferred user interface for the user.

8. The method as claimed in claim 7, further comprising updating the user interface by changing at least one of a font type, font size, font colour, or language for text presented on the user interface; and/or
further comprising updating the user interface by changing at least one of a global background colour of the user interface or a local background colour behind text presented on the user interface.

9. The method as claimed in any preceding claim, wherein the at least one respective operating parameter is at least one volume operating parameter for a speaker of the SST, and wherein the method further comprises, responsive to modifying at least one initial volume setting into at least one user preferred volume setting, updating the volume level output from the speaker to provide a preferred volume for the user.

10. The method as claimed in any preceding claim, further comprising receiving the user-selected setting data comprises receiving data indicative of the at least one user preferred setting that is predetermined by the user prior to initiation of a transaction at the SST; and optionally
wherein the user-selected setting data is predetermined by the user responsive to the user selecting the at least one user preferred setting via an app or web-based interface on a mobile device of the user which is then stored on the mobile device and/or transferred to a physical card of the user.

11. The method as claimed in any preceding claim, further comprising, prior to the updating, determining that required setting data to apply the at least one user preferred setting is available on the SST; and optionally
further comprising, when the required setting data is not available on the SST, transmitting, by the SST, a request to a server, that is remote from the SST, for the required setting data; and, responsive to transmitting the request, receiving, at the SST, the required setting data from the server.

12. The method as claimed in any preceding claim, further comprising performing a transaction at the SST with said at least one respective operating parameter of the SST updated based on the at least one user preferred setting; and optionally
further comprising, subsequent to completing the transaction, resetting at least one setting of the SST to said at least one initial setting.

13. A Self-Service Terminal (SST), comprising:
at least one processor configured to:
receive user-selected setting data indicative of at least one user preferred setting for at least one respective operating parameter of the SST;
modify at least one initial setting for the at least one respective operating parameter of the SST into the at least one user preferred setting; and
update the at least one respective operating parameter of the SST based on the at least one user preferred setting.

14. The Self-Service Terminal as claimed in claim 13, wherein the Self-Service Terminal is an Automated Teller Machine (ATM).

15. A computer program comprising instructions which, when executed by a computing device, cause the computing device to carry out the method of any one of claims 1 to 12.
